(19) Europäisches Patentamt / European Patent Office / Office européen des brevets

(11) **EP 4 761 445 A1**

(12) **EUROPEAN PATENT APPLICATION**
published in accordance with Art. 153(4) EPC

(43) Date of publication:
**17.06.2026 Bulletin 2026/25**

(21) Application number: **24853359.8**

(22) Date of filing: **17.06.2024**

(51) International Patent Classification (IPC):
**H04W 72/50** (2023.01)

(52) Cooperative Patent Classification (CPC):
**H04W 72/044; H04W 72/0446; H04W 72/50**

(86) International application number:
**PCT/CN2024/099519**

(87) International publication number:
**WO 2025/035944 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.08.2023 CN 202311012531**

(71) Applicant: **Datang Mobile Communications Equipment Co., Ltd.**
**Beijing 100085 (CN)**

(72) Inventors:
• ZHAO, Yue
  **Beijing 100085 (CN)**
• SI, Qianqian
  **Beijing 100085 (CN)**
• GAO, Xuejuan
  **Beijing 100085 (CN)**
• XING, Yanping
  **Beijing 100085 (CN)**

(74) Representative: **Maiwald GmbH**
**Elisenhof**
**Elisenstraße 3**
**80335 München (DE)**

(54) **INFORMATION PROCESSING METHOD AND APPARATUS, AND READABLE STORAGE MEDIUM**

(57) An information processing method and apparatus, and a readable storage medium are provided, which relates to the technical field of communications. The method includes: determining a first symbol set; and determining validity of a transmission occasion and/or a reception occasion based on the first symbol set.

FIG. 1

EP 4 761 445 A1

## Description

### CROSS-REFERENCE TO RELATED APPLICATION

This application claims a priority of Chinese Patent Application No. 202311012531.8 entitled "INFORMATION PROCESSING METHOD AND APPARATUS, AND READABLE STORAGE MEDIUM" filed on August 11, 2023, the entire contents of which are hereby incorporated by reference in their entirety.

### TECHNICAL FIELD

The present disclosure relates to the technical field of communications, and in particular to an information processing method and apparatus, and a readable storage medium.

### BACKGROUND

A research direction of sub-band full duplex (sub-band full duplex, SBFD) is proposed in the related technology, in which frequency-domain resources are divided into multiple non-overlapping sub-bands, with uplink and downlink frequency-domain resources allocated to different sub-bands respectively. To address the switching issue, the base station can avoid transmitting a downlink signal or scheduling/configuring terminals to transmit an uplink signal on a switching symbol between legacy symbols (such as downlink symbol (D), uplink symbol (U), flexible symbol F, etc.) and symbols including uplink or downlink sub-bands (or referred to as SBFD symbols). However, this method leads to higher scheduling complexity for the base station.

### SUMMARY

Embodiments of the present disclosure provides an information processing method and apparatus, and a readable storage medium, to reduce scheduling complexity of a network device.

In a first aspect, an embodiment of the present disclosure provides an information processing method, applied to a terminal, including:

    determining a first symbol set; and
    determining validity of a transmission occasion and/or a reception occasion based on the first symbol set.

In some embodiments, the first symbol set is used for switching between a sub-band full duplex (SBFD) symbol and a legacy symbol, and the legacy symbol includes one or more of an uplink symbol (U), a downlink symbol (D), or a flexible symbol (F).

In some embodiments, the determining the first symbol set includes: determining the first symbol set according to a protocol stipulation, where the protocol stipulation includes: taking K symbols before a set of consecutive SBFD symbols as the first symbol set; or, taking K symbols after a set of consecutive SBFD symbols as the first symbol set, where K is an integer greater than or equal to 0.

In some embodiments, the determining the first symbol set includes:

    receiving first information sent by a network device, where the first information is used to indicate a quantity K of symbols in the first symbol set;
    obtaining a position of the first symbol set stipulated by a protocol, where the position of the first symbol set includes before a set of consecutive SBFD symbols or after a set of consecutive SBFD symbols; and based on the quantity K of symbols and the position of the first symbol set, determining K symbols before the set of consecutive SBFD symbols as the first symbol set, or, determining K symbols after the set of consecutive SBFD symbols as the first symbol set, where K is an integer greater than or equal to 0.

In some embodiments, the determining the first symbol set includes:

    receiving second information sent by a network device, where the second information is used to indicate a position of each symbol included in the first symbol set; and
    determining the first symbol set based on the second information.

In some embodiments, the second information is further used to indicate information of the SBFD symbol.

In some embodiments, the determining the first symbol set includes:

    receiving third information sent by a network device, where the third information is used to determine a first parameter, and the first parameter is used to determine a quantity K of symbols in the first symbol set;
    obtaining a position of the first symbol set stipulated by a protocol, where the position of the first symbol set includes before a set of consecutive SBFD symbols or after a set of consecutive SBFD symbols; and based on the quantity K of symbols and the position of the first symbol set, taking K symbols before the set of consecutive SBFD symbols as the first symbol set, or taking K symbols after the set of consecutive SBFD symbols as the first symbol set, where K is an integer greater than or equal to 0.

In some embodiments, the K symbols of the first symbol set include: a symbol configured as a downlink symbol (D) and/or an uplink symbol (U).

In some embodiments, the determining the validity of the transmission occasion and/or the reception occasion based on the first symbol set includes one or more of the following:

discarding or delaying the transmission occasion and/or the reception occasion, in a case that at least one symbol corresponding to the transmission occasion and/or the reception occasion overlaps with at least one symbol in the first symbol set;
performing rate matching on a part of the transmission occasion and/or the reception occasion that does not overlap with the first symbol set, in a case that at least one symbol corresponding to the transmission occasion and/or the reception occasion overlaps with at least one symbol in the first symbol set;
discarding or delaying the transmission occasion, in a case that the transmission occasion overlaps with some or all of H symbols after the first symbol set;
performing rate matching on a target symbol, in a case that at least one symbol corresponding to the transmission occasion overlaps with H symbols after the first symbol set, where the target symbol is a symbol of the transmission occasion that does not overlap with the first symbol set and the H symbols; or
determining that a reception occasion on M symbols after the first symbol set is valid, where H and M are stipulated by a protocol or notified to the terminal by a network device, and H and M are integers greater than or equal to 0.

In some embodiments, the method further includes: determining that a transmission occasion on N symbols after the set of consecutive SBFD symbols is valid, where N is stipulated by a protocol or notified to the terminal by a network device, and N is an integer greater than or equal to 0.
In some embodiments, the method further includes:

receiving fourth information sent by a network device, where the fourth information is used to indicate information of the SBFD symbol; and
determining the set of consecutive SBFD symbols based on the fourth information.

In a second aspect, an embodiment of the present disclosure provides an information processing method, applied to a network device, including:

determining a first symbol set, and/or, sending indication information to a terminal, where the indication information is used to determine the first symbol set; and
determining validity of a transmission occasion and/or a reception occasion based on the first symbol set.

In some embodiments, the first symbol set is used for switching between an SBFD symbol and a legacy symbol, and the legacy symbol includes one or more of an uplink symbol (U), a downlink symbol (D), or a flexible symbol (F).
In some embodiments, the sending the indication information to the terminal includes:

sending first information to the terminal, where the first information is used to indicate a quantity K of symbols in the first symbol set; or,
sending second information to the terminal, where the second information is used to indicate a position of each symbol included in the first symbol set; or,
sending third information to the terminal, where the third information is used to determine a first parameter, and the first parameter is used to determine a quantity K of symbols in the first symbol set, where K is an integer greater than or equal to 0.

In some embodiments, the second information is further used to indicate information of the SBFD symbol; or, the method further includes: sending fourth information to the terminal, where the fourth information is used to indicate information of the SBFD symbol.
In some embodiments, the determining the first symbol set includes: determining the first symbol set according to a protocol stipulation, where the protocol stipulation includes: taking K symbols before a set of consecutive SBFD symbols as the first symbol set; or, taking K symbols after a set of consecutive SBFD symbols as the first symbol set, where K is an integer greater than or equal to 0.
In some embodiments, the K symbols of the first symbol set include: a symbol configured as a downlink symbol (D) and/or an uplink symbol (U).
In some embodiments, the determining the validity of the transmission occasion and/or the reception occasion based on the first symbol set includes one or more of the following:

discarding or delaying the transmission occasion and/or the reception occasion, in a case that at least one symbol corresponding to the transmission occasion and/or the reception occasion overlaps with at least one symbol in the first symbol set;
performing rate matching on a part of the transmission occasion and/or the reception occasion that does not overlap with the first symbol set, in a case that at least one symbol corresponding to the transmission occasion and/or the reception occasion overlaps with at least one symbol in the first symbol set;
discarding or delaying the transmission occasion, in a case that the transmission occasion overlaps with some or all of H symbols after the first symbol set;
performing rate matching on a target symbol, in a case that at least one symbol corresponding to the transmission occasion overlaps with H symbols after the first symbol set, where the target symbol is a symbol of the transmission occasion that does not overlap with the first symbol set and the H symbols; or

determining that a reception occasion on M symbols after the first symbol set is valid, where H and M are stipulated by a protocol or notified to the terminal by the network device, and H and M are integers greater than or equal to 0.

In some embodiments, the method further includes: determining that a reception occasion on N symbols after the set of consecutive SBFD symbols is valid, where N is stipulated by a protocol or notified to the terminal by the network device, and N is an integer greater than or equal to 0.

In a third aspect, an embodiment of the present disclosure provides an information processing apparatus, applied to a terminal, including: a memory, a transceiver and a processor, where the memory is configured to store a computer program; the transceiver is configured to transmit and receive data under the control of the processor; the processor is configured to read the computer program from the memory and execute the following operations:

determining a first symbol set; and
determining validity of a transmission occasion and/or a reception occasion based on the first symbol set.

In some embodiments, the first symbol set is used for switching between a sub-band full duplex (SBFD) symbol and a legacy symbol, and the legacy symbol includes one or more of an uplink symbol (U), a downlink symbol (D), or a flexible symbol (F).

In some embodiments, the processor is further configured to read the computer program from the memory and execute the following operations:
determining the first symbol set according to a protocol stipulation, where the protocol stipulation includes:

taking K symbols before a set of consecutive SBFD symbols as the first symbol set; or,
taking K symbols after a set of consecutive SBFD symbols as the first symbol set, where K is an integer greater than or equal to 0.

In some embodiments, the processor is further configured to read the computer program from the memory and execute the following operations:

receiving first information sent by a network device, where the first information is used to indicate a quantity K of symbols in the first symbol set;
obtaining a position of the first symbol set stipulated by a protocol, where the position of the first symbol set includes before a set of consecutive SBFD symbols or after a set of consecutive SBFD symbols; and based on the quantity K of symbols and the position of the first symbol set, determining K symbols before the set of consecutive SBFD symbols as the first symbol set, or, determining K symbols after the set of consecutive SBFD symbols as the first symbol set, where K is an integer greater than or equal to 0.

In some embodiments, the processor is further configured to read the computer program from the memory and execute the following operations:

receiving second information sent by a network device, where the second information is used to indicate a position of each symbol included in the first symbol set; and
determining the first symbol set based on the second information.

In some embodiments, the second information is further used to indicate information of the SBFD symbol.

In some embodiments, the processor is further configured to read the computer program from the memory and execute the following operations:

receiving third information sent by a network device, where the third information is used to determine a first parameter, and the first parameter is used to determine a quantity K of symbols in the first symbol set;
obtaining a position of the first symbol set stipulated by a protocol, where the position of the first symbol set includes before a set of consecutive SBFD symbols or after a set of consecutive SBFD symbols; and
based on the quantity K of symbols and the position of the first symbol set, taking K symbols before the set of consecutive SBFD symbols as the first symbol set, or taking K symbols after the set of consecutive SBFD symbols as the first symbol set, where K is an integer greater than or equal to 0.

In some embodiments, the K symbols of the first symbol set include: a symbol configured as a downlink symbol (D) and/or an uplink symbol (U).

In some embodiments, the processor is further configured to read the computer program from the memory and perform one or more of the following operations:

discarding or delaying the transmission occasion and/or the reception occasion, in a case that at least one symbol corresponding to the transmission occasion and/or the reception occasion overlaps with at least one symbol in the first symbol set;
performing rate matching on a part of the transmission occasion and/or the reception occasion that does not overlap with the first symbol set, in a case that at least one symbol corresponding to the transmission occasion and/or the reception occasion overlaps with at least one symbol in the first symbol set;

discarding or delaying the transmission occasion, in a case that the transmission occasion overlaps with some or all of H symbols after the first symbol set;

performing rate matching on a target symbol, in a case that at least one symbol corresponding to the transmission occasion overlaps with H symbols after the first symbol set, where the target symbol is a symbol of the transmission occasion that does not overlap with the first symbol set and the H symbols; or

determining that a reception occasion on M symbols after the first symbol set is valid, where H and M are stipulated by a protocol or notified to the terminal by a network device, and H and M are integers greater than or equal to 0.

In some embodiments, the processor is further configured to read the computer program from the memory and execute the following operations: determining that a transmission occasion on N symbols after the set of consecutive SBFD symbols is valid, where N is stipulated by a protocol or notified to the terminal by a network device, and N is an integer greater than or equal to 0.

In some embodiments, the processor is further configured to read the computer program in the memory and perform the following operations:

receiving fourth information sent by a network device, where the fourth information is used to indicate information of the SBFD symbol; and

determining the set of consecutive SBFD symbols based on the fourth information.

In a fourth aspect, an embodiment of the present disclosure provides an information processing information processing apparatus, applied to a network device, including: a memory, a transceiver and a processor, where the memory is configured to store a computer program; the transceiver is configured to transmit and receive data under the control of the processor; the processor is configured to read the computer program from the memory and execute the following operations:

determining a first symbol set, and/or, sending indication information to a terminal, where the indication information is used to determine the first symbol set; and

determining validity of a transmission occasion and/or a reception occasion based on the first symbol set.

In some embodiments, the first symbol set is used for switching between an SBFD symbol and a legacy symbol, and the legacy symbol includes one or more of an uplink symbol (U), a downlink symbol (D), or a flexible symbol (F).

In some embodiments, the processor is further configured to read the computer program from the memory and execute the following operations:

sending first information to the terminal, where the first information is used to indicate a quantity K of symbols in the first symbol set; or,

sending second information to the terminal, where the second information is used to indicate a position of each symbol included in the first symbol set; or,

sending third information to the terminal, where the third information is used to determine a first parameter, and the first parameter is used to determine a quantity K of symbols in the first symbol set, where K is an integer greater than or equal to 0.

In some embodiments, the second information is further used to indicate information of the SBFD symbol; or the processor is further configured to read the computer program in the memory and perform the following operations: sending fourth information to the terminal, where the fourth information is used to indicate information of the SBFD symbol.

In some embodiments, the processor is further configured to read the computer program from the memory and execute the following operations:

determining the first symbol set according to a protocol stipulation, where the protocol stipulation includes:

taking K symbols before a set of consecutive SBFD symbols as the first symbol set; or,

taking K symbols after a set of consecutive SBFD symbols as the first symbol set, where K is an integer greater than or equal to 0.

In some embodiments, the K symbols of the first symbol set include: a symbol configured as a downlink symbol (D) and/or an uplink symbol (U).

In some embodiments, the processor is further configured to read the computer program in the memory and perform one or more of the following operations:

discarding or delaying the transmission occasion and/or the reception occasion, in a case that at least one symbol corresponding to the transmission occasion and/or the reception occasion overlaps with at least one symbol in the first symbol set;

performing rate matching on a part of the transmission occasion and/or the reception occasion that does not overlap with the first symbol set, in a case that at least one symbol corresponding to the transmission occasion and/or the reception occasion overlaps with at least one symbol in the first symbol set;

discarding or delaying the transmission occasion, in a case that the transmission occasion overlaps with some or all of H symbols after the first symbol set; performing rate matching on a target symbol, in a case that at least one symbol corresponding to the transmission occasion overlaps with H symbols after the first symbol set, where the target symbol is a symbol of the transmission occasion that does not overlap with the first symbol set and the H symbols; or

determining that a reception occasion on M symbols after the first symbol set is valid, where H and M are stipulated by a protocol or notified to the terminal by the network device, and H and M are integers greater than or equal to 0.

In some embodiments, the processor is further configured to read the computer program from the memory and perform one or more of the following operations: determining a reception occasion on N symbols after the set of consecutive SBFD symbols is valid, where N is stipulated by a protocol or notified to the terminal by the network device, and N is an integer greater than or equal to 0.

In a fifth aspect, an embodiment of the present disclosure provides an information processing information processing apparatus, applied to a terminal, including:

a first determining unit, configured to determine a first symbol set; and

a second determining unit, configured to determine validity of a transmission occasion and/or a reception occasion based on the first symbol set.

In a sixth aspect, an embodiment of the present disclosure provides an information processing apparatus, applied to network device, including:

a first processing unit, configured to determine a first symbol set, and/or, send indication information to a terminal, where the indication information is used to determine the first symbol set; and

a second processing unit, configured to determine validity of a transmission occasion and/or a reception occasion based on the first symbol set.

In a seventh aspect, an embodiment of the present disclosure provides a processor-readable storage medium, where the processor-readable storage medium stores a computer program, and the computer program is configured to cause the processor to perform the information processing method.

In the embodiments of the present disclosure, the terminal may determine the validity of a transmission occasion and/or a reception occasion based on the determined first symbol set, thereby solving the switching problem between symbols and reducing scheduling complexity of the network device.

## BRIEF DESCRIPTION OF THE DRAWINGS

FIG. 1 is a first flow chart of an information processing method according to an embodiment of the present disclosure;

FIG. 2 is a second flow chart of an information processing method according to an embodiment of the present disclosure;

FIG. 3 to FIG. 7 each is a schematic diagram of symbol switching according to an embodiment of the present disclosure;

FIG. 8 is a first structural diagram of an information processing apparatus according to an embodiment of the present disclosure;

FIG. 9 is a second structural diagram of an information processing apparatus according to an embodiment of the present disclosure;

FIG. 10 is a third structural diagram of an information processing apparatus according to an embodiment of the present disclosure; and

FIG. 11 is a fourth structural diagram of an information processing apparatus according to an embodiment of the present disclosure.

## DETAILED DESCRIPTION

The term "and/or" in the embodiments of the present disclosure describes the association relationship of associated objects and indicates that there may be three types of relationships. For example, A and/or B may represent three situations including: A alone, both A and B, and B alone. The character "/" generally indicates that the associated objects are in an "or" relationship.

The term "multiple" used in the embodiments of the present disclosure refers to two or more, and other quantifiers are similar thereto.

In the following, technical solutions in embodiments of the present disclosure will be described in a clear and thorough manner with reference to the drawings in the embodiments of the present disclosure. Apparently, the described embodiments are merely a part of, rather than all of, the embodiments of the present disclosure. Based on the embodiments of the present disclosure, a person skilled in the art may, without creative effort, obtain other embodiments, all of which shall fall within the scope of the present disclosure.

Embodiments of the present disclosure provide an information processing method and apparatus, to reduce scheduling complexity of a network device.

The method and the apparatus are based on the same application concept. Since the method and the apparatus solve a problem in a similar principle, implementations of the method and the apparatus may refer to each other, and repeated parts will not be omitted.

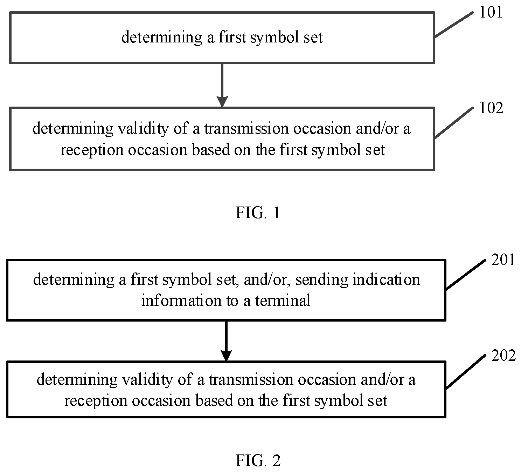

Referring to FIG. 1, FIG. 1 is a flow chart of an information processing method according to an embodiment of the present disclosure, which is applied to a terminal, and includes the following steps as shown in FIG. 1.

Step 101: determining a first symbol set.

The first symbol set is used for switching between an SBFD symbol and a legacy symbol, reserving switching time for a terminal and/or a network device, that is, the first symbol set is used for switching from the SBFD symbol to the legacy symbol, or, the first symbol set is used for switching from the legacy symbol to the SBFD symbol, and the legacy symbol includes one or more of an uplink symbol (U), a downlink symbol (D), or a flexible symbol (F).

In an embodiment of the present disclosure, the terminal may determine the first symbol set in multiple manners.

Manner 1: determining the first symbol set according to a protocol regulation.

The protocol regulation includes: taking K symbols before a set of consecutive SBFD symbols as the first symbol set; or, taking K symbols after a set of consecutive SBFD symbols as the first symbol set, where K is an integer greater than or equal to 0. The K value may be a predefined value, for example, the K value may be defined according to factors such as SCS (Subcarrier Spacing), FR1 (Frequency range 1), FR2 (Frequency range 2), and/or a switching position.

For example, the first symbol set may be the K symbols before a set of consecutive SBFD symbols, for example, symbols n-K, n-K+1,..., n-1, where n is a position of the first SBFD symbol in the set of consecutive SBFD symbols; or, the first symbol set may be the K symbols after a set of consecutive SBFD symbols, for example, symbols n+1, n+2,..., n+K, where n is a position of the last SBFD symbol in the set of SBFD symbols.

In an embodiment of the present disclosure, the K symbols of the first symbol set include: a symbol configured as a downlink symbol (D) and/or an uplink symbol (U), for example, a symbol configured as a downlink symbol (D) and/or an uplink symbol (U) by a cell-level common configuration of tdd-UL-DL-ConfigurationCommon; and/or a symbol configured as a downlink symbol (D) and/or an uplink symbol (U) by a terminal-level configuration of tdd-UL-DL-ConfigurationDedicated.

Manner 2: the terminal determines the first symbol set according to instruction from a network device (such as a base station) and a protocol specification. This manner may also include any of the following manner.

Manner 2.1: the terminal receives first information sent by the network device, the first information is used to indicate a quantity K of symbols in the first symbol set, and obtains a position of the first symbol set stipulated by the protocol, where the position of the first symbol set includes before a set of consecutive SBFD symbols or after a set of consecutive SBFD symbols. Afterwards, the terminal determines that the K symbols before the set of consecutive SBFD symbols are the first symbol set, or determines that the K symbols after the set of consecutive SBFD symbols are the first symbol set, according to the quantity K of symbols and the position of the first symbol set, where K is an integer greater than or equal to 0.

The network device may send the first information via radio resource control (Radio Resource Control, RRC) signaling.

Manner 2.2: the terminal receives third information sent by the network device, and obtains a position of the first symbol set stipulated by a protocol, where the position of the first symbol set includes before a set of consecutive SBFD symbols or after a set of consecutive SBFD symbols, the third information is used to determine a first parameter, and the first parameter is used to determine the quantity K of symbols in the first symbol set. Afterwards, the terminal may take K symbols before a set of consecutive SBFD symbols as the first symbol set, or may take K symbols after the set of consecutive SBFD symbols as the first symbol set, based on the quantity K of symbols and the position of the first symbol set, where K is an integer greater than or equal to 0.

For example, the third information may include information of a first parameter, and the terminal determines the first parameter according to the third information. Assuming that the first parameter is $\alpha$, for example, the quantity K of symbols in the first symbol set is $\left\lceil \frac{\alpha}{T} \right\rceil$, where T is a length of a symbol, and $\lceil \ \rceil$ represents rounding up. For another example, the quantity K of symbols in the first symbol set is $\left\lceil \frac{\alpha * N_{TA,offset}}{T} \right\rceil$, where T is a length of a symbol, and $N_{TA,offset}$ is determined by n-TimingAdvanceOffset or according to a protocol regulation, and $\lceil \ \rceil$ represents rounding up.

The method for obtaining K is the same as that in manner 1, and contents of the K symbols of the first symbol set are the same as those in manner 1. The network device may send the third information through RRC signaling.

Manner 3: the terminal determines the first symbol set according to instruction from the network device (such as the base station).

In this manner, the terminal may receive second information sent by the network device, and may determine the first symbol set according to the second information, where the second information is used to indicate a position of each symbol included in the first symbol set. The network device may send the second information via RRC signaling.

In some embodiments, the second information may also indicate information of the SBFD symbol, so that the terminal may accurately determine the first symbol set. The contents of the K symbols of the first symbol set are the same as those in manner 1.

In some embodiments of the present disclosure, the terminal may also receive fourth information sent by the network device, the fourth information being used to indicate information of the SBFD symbol, and then the terminal may determine the set of consecutive SBFD symbols according to the fourth information, thereby facilitating the terminal to determine positions of the K symbols. The network device may send the fourth information via RRC signaling or the like.

Step 102: determining validity of a transmission occasion and/or a reception occasion based on the first symbol set.

The determining the validity of the transmission occasion and/or the reception occasion may also be understood as determining whether the transmission occasion and/or reception occasion is valid, for example, whether data can be sent at the transmission occasion, or received at the reception occasion.

In an embodiment of the present disclosure, the terminal may determine the validity in one or more of the following ways:

discarding or delaying the transmission occasion and/or the reception occasion, in a case that at least one symbol corresponding to the transmission occasion and/or the reception occasion overlaps with at least one symbol in the first symbol set;

performing rate matching on a part of the transmission occasion and/or the reception occasion that does not overlap with the first symbol set, in a case that at least one symbol corresponding to the transmission occasion and/or the reception occasion overlaps with at least one symbol in the first symbol set;

discarding or delaying the transmission occasion, in a case that the transmission occasion overlaps with some or all of H symbols after the first symbol set (that is, the first H symbols of the set of consecutive SBFD symbols);

performing rate matching on a target symbol, in a case that at least one symbol corresponding to the transmission occasion overlaps with H symbols after the first symbol set (that is, the first H symbols of the set of consecutive SBFD symbols), where the target symbol is a symbol of the transmission occasion that does not overlap with the first symbol set and the H symbols; or

determining that a reception occasion on M symbols after the first symbol set (that is, the first M symbols of the set of consecutive SBFD symbols) is valid;

where H and M are stipulated by the protocol or notified by the network device to the terminal, and H and M are integers greater than or equal to 0.

In some embodiments, the terminal may also determine that N symbols after the set of consecutive SBFD symbols have a valid transmission occasion, where N is specified by the protocol or notified to the terminal by the network device, and N is an integer greater than or equal to 0. The terminal may send an uplink transmission on the N symbols, and the uplink transmission may be dynamically configured and/or configured by a higher layer.

In the embodiment of the present disclosure, H, K, M, N, etc. may take values of 0, 1, 2, 3 or 4, etc.

In the embodiments of the present disclosure, since the terminal may determine validity of a transmission occasion and/or a reception occasion based on the determined first symbol set, even if the network device configures or schedules the uplink transmission or the downlink reception for the terminal on the determined first symbol set, the terminal may not send an uplink transmission or receive a downlink transmission, thereby solving the problem of switching between symbols and reducing scheduling complexity of the network device.

Referring to FIG. 2, FIG. 2 is a flow chart of an information processing method according to an embodiment of the present disclosure, which is applied to a network device, and includes the following steps as shown in FIG. 2.

Step 201: determining a first symbol set, and/or, sending indication information to a terminal, where the indication information is used to determine the first symbol set.

The first symbol set is used for switching between an SBFD symbol and a legacy symbol, and the legacy symbol includes one or more of an uplink symbol (U), a downlink symbol (D), or a flexible symbol (F).

Specifically, the network device may determine the first symbol set according to a protocol stipulation, where the protocol stipulation includes: taking K symbols before a set of consecutive SBFD symbols as the first symbol set; or, taking K symbols after a set of consecutive SBFD symbols as the first symbol set, where K is an integer greater than or equal to 0. The K value may be a predefined value, or the K value may be defined according to factors such as SCS, FR1, FR2 and/or a switching position.

Specifically, the indication information may include first information, second information, third information, etc.

For example, the network device may send the first information to the terminal, where the first information is used to indicate the number K of symbols in the first symbol set.

Alternatively, the network device may send the second information to the terminal, where the second information is used to indicate a position of each symbol included in the first symbol set. In some embodiments, the second information is also used to indicate information of SBFD symbols.

Alternatively, the network device may send the third information to the terminal, where the third information is used to determine a first parameter, where the first parameter is used to determine the number K of symbols in the first symbol set, where K is an integer greater than or equal to 0.

In some embodiments, the network device may further send fourth information to the terminal, where the fourth information is used to indicate information of the SBFD symbol.

The contents of the K symbols of the first symbol set may refer to the description of the aforementioned embodiments.

Step 202: determining validity of a transmission occasion and/or a reception occasion based on the first symbol set.

In an embodiment of the present disclosure, the network device may determine the validity in one or more of the following ways:

discarding or delaying the transmission occasion and/or the reception occasion, in a case that at least one symbol corresponding to the transmission occasion and/or the reception occasion overlaps with at least one symbol in the first symbol set;

performing rate matching on a part of the transmission occasion and/or the reception occasion that does not overlap with the first symbol set, in a case that at least one symbol corresponding to the transmission occasion and/or the reception occasion overlaps with at least one symbol in the first symbol set;

discarding or delaying the transmission occasion, in a case that the transmission occasion overlaps with some or all of H symbols (that is, the first H symbols of the set of consecutive SBFD symbols) after the first symbol set;

performing rate matching on a target symbol, in a case that at least one symbol corresponding to the transmission occasion overlaps with H symbols (that is, the first H symbols of the set of consecutive SBFD symbols) after the first symbol set, where the target symbol is a symbol of the transmission occasion that does not overlap with the first symbol set and the H symbols; or

determining that a reception occasion on M symbols (that is, the first M symbols of the set of consecutive SBFD symbols) after the first symbol set is valid,

In some embodiments, the network device may also determine that the reception occasion is valid for N symbols after the set of consecutive SBFD symbols, where N is specified by a protocol or notified by the network device to the terminal, and N is an integer greater than or equal to 0. The network device may receive an uplink transmission sent by the terminal on the N symbols, and the uplink transmission may be dynamically configured by the network device, and/or configured by the network device to the terminal through a higher layer.

The H and M are specified by the protocol or notified to the terminal by the network device, and the H and M are integers greater than or equal to 0. H, K, M, N, etc. may take values of 0, 1, 2, 3 or 4, etc.

In the embodiments of the present disclosure, since the terminal may determine validity of a transmission occasion and/or a reception occasion based on the determined first symbol set, even if the network device configures or schedules the uplink transmission or the downlink reception for the terminal on the determined first symbol set, the terminal may not send the uplink transmission or receive the downlink reception, thereby solving the problem of switching between symbols and reducing scheduling complexity of the network device.

Specific implementation processes of the embodiments of the present disclosure will be introduced below in combination with different embodiments. The network device is described by taking a terminal as an example.

In an embodiment of the present disclosure, the terminal switches from a uplink symbol (U) to an SBFD symbol.

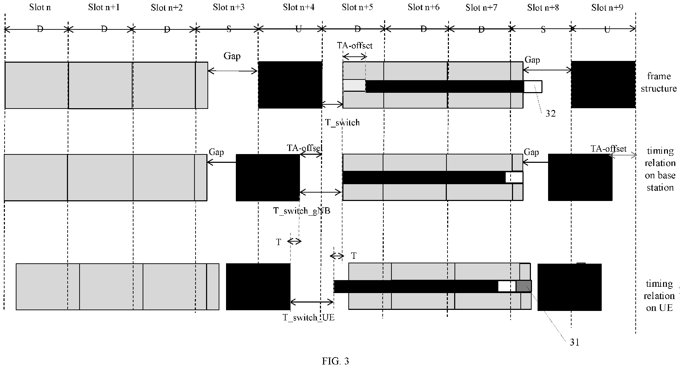

In the embodiment, K symbols before a set of consecutive SBFD symbols may be defined by a protocol as the first symbol set, such as symbols n-K, n-K+1, ..., n-1, where n is a position of the first SBFD symbol in the set of consecutive SBFD symbols. For example, it is stipulated by a protocol that K symbols corresponding to T_switch in FIG. 3 are the first symbol set. The first symbol set is determined by the terminal and the base station according to the protocol.

Alternatively, the base station indicates through RRC signaling that the number of symbols in the first symbol set is K, and the protocol stipulates that the K symbols before the set of consecutive SBFD symbols are the first symbol set, for example, the K symbols corresponding to T_switch in FIG. 3 are the first symbol set. The terminal determines the first symbol set according to the K value and positions of the K symbols stipulated by the protocol.

Alternatively, the base station indicates third information through RRC signaling, and the third information is used to determine the parameter $\alpha$, and the parameter $\alpha$ is used to determine the number K of symbols in the first symbol set. The protocol stipulates that the K symbols before the set of consecutive SBFD symbols are the first symbol set. The terminal determines the first symbol set according to the parameter $\alpha$ and the protocol. For example, the number K of symbols in the first symbol set is $\left\lceil \dfrac{\alpha}{T} \right\rceil$, where T is a length of a symbol. For another example, the number K of symbols in the first symbol set is $\left\lceil \dfrac{\alpha * N_{TA,offset}}{T} \right\rceil$, where T is a length of a symbol, and $N_{TA,offset}$ is determined by n-TimingAdvanceOffset or according to a table in a protocol.

Alternatively, the base station indicates a position of each of symbols included in the first symbol set through RRC signaling. For example, the base station may further configure the first symbol set from symbols configured as D, U or F through tdd-UL-DL-ConfigurationCommon and/or tdd-UL-DL-ConfigurationDedicated. For example, slot n+5 is configured as D by tdd-UL-DL-ConfigurationCommon and/or tdd-UL-DL-ConfigurationDedicated, and the base station further indicates symbols in slot n+5 of FIG. 3 as {TTXXXXX XXXXXXX} through RRC signaling, where {TT} represents the first symbol set, and X represents the SBFD symbol. The terminal determines the first symbol set according to instruction from the base station via the RRC signaling. In FIG. 3, the switching time configured by the base station does not include a TA-offset time.

In a case where a transmission occasion and/or a reception occasion partially or completely overlaps with the first symbol set, the terminal discards the transmission occasion and/or the reception occasion, delays the transmission occasion and/or the reception occasion, or the terminal performs rate matching on a part of the transmission occasion and/or the reception occasion that does not overlap with the first symbol set.

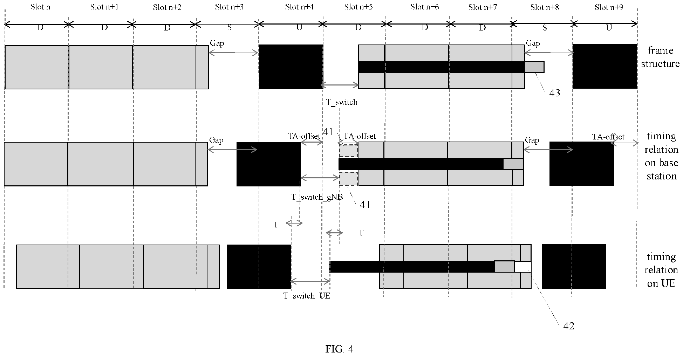

Considering that a transmission on an uplink sub-band has a timing advance, to prevent the transmission on an uplink sub-band from arriving early at the base station and from compressing a switching time of the base station, it may be considered that the first H symbols of the SBFD symbols are not used for uplink transmissions, for example, H symbols corresponding to the TA-offset in the frame format diagram of FIG. 3. Alternatively, in a case where the first symbol set configured by the base station is long enough, even if the transmission on the uplink sub-band has a timing advance, the base station still has sufficient switching time. In this case, it may be considered to use the last M symbols in the first symbol set (i.e., M symbols before the set of consecutive SBFD symbols) for downlink transmission, such as the M symbols indicated by a reference sign 41 in FIG. 4, so as to improve resource utilization. In FIG. 4, the switching time configured by the base station includes the time of TA-offset.

In some embodiments, considering that a transmission on the uplink sub-band has a timing advance, it may be considered that the terminal may send an uplink transmission on N symbols after the set of consecutive SBFD symbol. For example, in frame format diagrams of FIG. 3 and FIG. 4, due to a timing advance (indicated by a reference sign 32 in FIG. 3 and a reference sign 43 in FIG. 4), a transmission on this part will be aligned with downlink timing upon reaching the side of the base station, and may potentially not compress the switching time from SBFD to U. Allowing uplink transmissions on N symbols after the set of consecutive SBFD symbols can effectively utilize resources.

In some embodiments, on the side of the terminal, the terminal may determine whether it can transmit an uplink transmission on a resource indicated by a reference sign 31 in FIG. 3 and a resource indicated by a reference sign 42 in FIG. 4 based on its own switching time requirement and/or a switching time requirement of the base station. The switching time requirement of the base station may be stipulated by a protocol or notified by the base station.

In an embodiment of the present disclosure, the terminal switches from a downlink symbol (D) to an SBFD symbol.

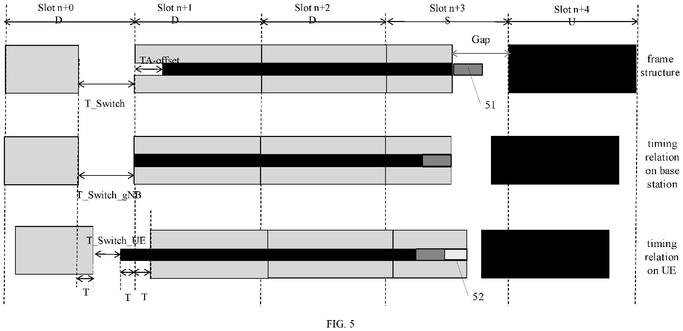

The K symbols before a set of consecutive SBFD symbols may be specified by a protocol as a first symbol set, for example, n-K, n-K+1, ..., n-1, where n is a position of the first SBFD symbol in the set of consecutive SBFD symbols, for example, the protocol specifies that K symbols corresponding to T_Switch in FIG. 5 are the first symbol set. The first symbol set is determined by the terminal and the base station according to the protocol.

Alternatively, the base station indicates through RRC that the number of symbols in the first symbol set is K, and the protocol defines that K symbols before a set of consecutive SBFD symbols are the first symbol set, for example, K symbols corresponding to T_switch in FIG. 5 are the first symbol set. The terminal determines the first symbol set according to the K value and positions of the K symbols defined by the protocol.

Alternatively, the base station indicates third information through RRC signaling, and the third information is used to determine the parameter $\alpha$, and the parameter $\alpha$ is used to determine the quantity K of symbols in the first symbol set. The protocol stipulates that K symbols before a set of consecutive SBFD symbols are the first symbol set. The terminal determines the first symbol set according to the parameter $\alpha$ and the protocol. For example, the quantity K of symbols in the first symbol set is $\left\lceil \frac{\alpha}{T} \right\rceil$, where T is a length of a symbol. For another example, the quantity K of symbols in the first symbol set is $\left\lceil \frac{\alpha * N_{TA,offset}}{T} \right\rceil$, where T is a length of a symbol, and $N_{TA,offset}$ is determined by n-TimingAdvanceOffset or according to a table in a protocol.

Alternatively, the base station indicates a position of each of symbols included in the first symbol set through RRC signaling. For example, the base station may further configure the first symbol set by symbols configured as D, U or F through tdd-UL-DL-Configuration Common and/or tdd-UL-DL-ConfigurationDedicated. For example, slot n+5 is configured as D by tdd-UL-DL-ConfigurationCommon and/or tdd-UL-DL-ConfigurationDedicated, and the base station further indicates symbols in slot n+5 of FIG. 5 as {TTXXXXX XXXXXXX} through RRC signaling, where {TT} represents the first symbol set, and X represents the SBFD symbol. The terminal determines the first symbol set according to instruction from the base station via RRC signaling. In FIG. 5, the switching time configured by the base station does not include a TA-offset time.

In a case where a transmission occasion and/or a reception occasion partially or completely overlaps with the first symbol set, the terminal discards the transmission occasion and/or the reception occasion, delays the transmission occasion and/or the reception occasion, or the terminal performs rate matching on a part of the transmission occasion and/or the reception occasion that does not overlap with the first symbol set.

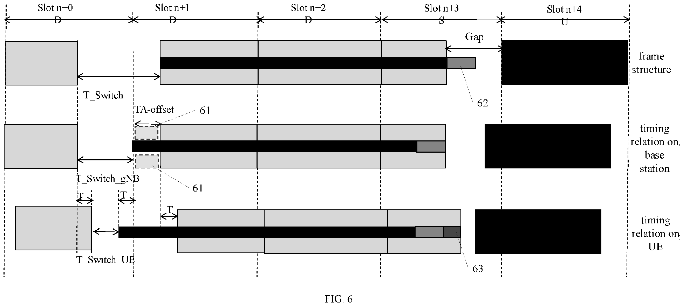

Considering that a transmission on an uplink sub-band has a timing advance, to prevent the transmission on an uplink sub-band from arriving early at the base station and from compressing a switching time of the base station, it may be considered that the first H symbols of the SBFD symbols are not used for uplink transmissions, such as H symbols corresponding to TA-offset in the frame format diagram of FIG. 5. Alternatively, in a case where the first symbol set configured by the base station is long enough, even if a transmission on the uplink sub-band has a timing advance, the base station still has sufficient switching time. In this case, it may be considered to use the last M symbols in the first symbol set (or the M symbols before the set of consecutive SBFD symbols) to receive downlink transmission, such as M symbols corresponding to a reference sign 61 in FIG. 6, so as to improve resource utilization. In FIG. 6, the switching time configured by the base station does not include the TA-offset time.

In some embodiments, considering that a transmission on the uplink sub-band has a timing advance, it may be considered that the terminal may send an uplink transmission on N symbols after the set of consecutive SBFD symbols. For example, in the frame format diagrams of FIG. 5 and FIG. 6 (indicated by a reference sign 51 in FIG. 5 and a reference sign 62 in FIG. 6), due to the timing advance, a transmission on this part will be aligned with downlink timing upon reaching the side of the base station, and may potentially not compress the switching time from SBFD to U. Allowing uplink transmissions on N symbols after the set of consecutive SBFD symbols can effectively utilize resources.

In some embodiments, on the side of the terminal, the terminal may determine whether it can transmit an uplink transmission on resources of FIG. 5 (resources indicated by a reference sign 52) and FIG. 6 (resources indicated by a reference sign 63) based on its own switching time requirement and/or a switching time requirement of the base station. The switching time requirement of the base station may be specified by a protocol or notified by the base station.

In an embodiment of the present disclosure, the terminal is switched from the SBFD symbol to the D symbol.

In the embodiment, K symbols after a set of consecutive SBFD symbols may be defined as a first symbol set by a protocol, for example, symbols n+1, n+2, ..., n+K, where n is a position of the last SBFD symbol in the set of SBFD symbols. The K symbols corresponding to T_Switch_1 in FIG. 5 are the first symbol set. The first symbol set is determined by the terminal and the base station according to the protocol.

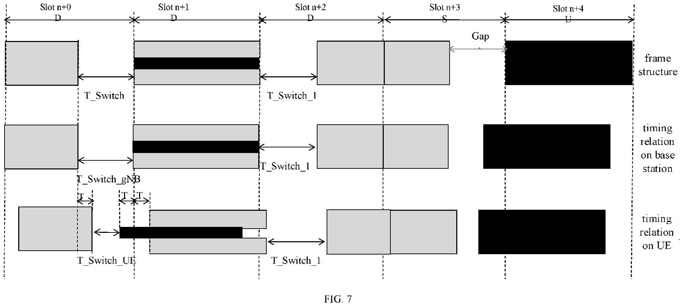

Alternatively, the base station indicates through RRC that the number of symbols in the first symbol set is K, and the protocol specifies that K symbols after a set of consecutive SBFD symbols are the first symbol set. For example, K symbols corresponding to T_Switch_1 in FIG. 7 are the first symbol set. The terminal determines the first symbol set according to the K value and positions of the K symbols specified by the protocol.

Alternatively, the base station indicates third information through RRC signaling, and the third information is used to determine the parameter $\alpha$, and the parameter $\alpha$ is used to determine the quantity K of symbols in the first symbol set. The protocol stipulates that K symbols before the set of consecutive SBFD symbols are the first symbol set. The terminal determines the first symbol set according to the parameter $\alpha$ and the protocol. For example, the quantity K of symbols in the first symbol set is $\left\lceil \dfrac{\alpha}{T} \right\rceil$, where T is a length of a symbol. For another example, the quantity K of symbols in the first symbol set is $\left\lceil \dfrac{\alpha * N_{TA,offset}}{T} \right\rceil$, where T is a length of a symbol, and $N_{TA,offset}$ is determined by n-TimingAdvanceOffset or according to a table in the protocol.

Alternatively, the base station indicates a position of each symbol included in the first symbol set through RRC signaling. For example, the base station may further configure the first symbol set from symbols configured as D, U or F through tdd-UL-DL-ConfigurationCommon and/or tdd-UL-DL-ConfigurationDedicated. For example, slot n+2 is configured as D by tdd-UL-DL-ConfigurationCommon and/or tdd-UL-DL-ConfigurationDedicated, and the base station further indicates symbols in slot n+2 of FIG. 7 as {TTXXXXX XXXXXXX} through RRC signaling, where {TT} represents the first symbol set, and X represents the SBFD symbol. The terminal determines the first symbol set according to instruction from the base station through RRC signaling.

In a case where a transmission occasion and/or a reception occasion partially or completely overlaps with the first symbol set, the terminal discards the transmission occasion and/or the reception occasion, delays the transmission occasion and/or the reception occasion, or the terminal performs rate matching on a part of the transmission occasion and/or the reception occasion that does not overlap with the first symbol set.

It may be seen from the above descriptions that, by using the solution of the embodiments of the present disclosure, the problem of switching between SBFD symbols and legacy symbols may be solved, thereby reducing scheduling complexity of the base station.

It is noted that the technical solution according to embodiments of the present disclosure may be applied to various systems, particularly to a 5G system. For example, an applicable system may be a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, and a 5G New Radio (NR) system. Each of the various systems includes a terminal and a network device. The systems may further include a core network portion, such as an evolved packet system (EPS), or a 5G system (5GS).

The terminal involved in the embodiments of the present disclosure may be a device that provides voice and/or data connectivity to a user, a handheld device with a radio connection function, or other processing devices connected to a radio modem or the like. In different systems, the names of terminal may be different. For example, in a 5G system, a terminal may be referred to as user equipment (UE). A wireless terminal can communicate with one or more core networks (CNs) via a radio access network (RAN), and the wireless terminal may be a mobile terminal, such as a mobile phone (or referred to as "cellular" phone) and a computer with a mobile terminal, such as a portable, pocket-sized, hand-held, computer built-in or vehicle-mounted mobile apparatus, which exchange voice and/or data with the radio access network. For example, personal communication service (PCS) phones, cordless phones, session initiated protocol (SIP) phones, wireless local loop (WLL) stations, personal digital assistant (PDA) and other devices. The wireless terminal may also be referred to as a system, subscriber unit, subscriber station, mobile station, mobile, remote station, access point, remote terminal, access terminal, user terminal, user agent and user device, which are not limited in the embodiments of the present disclosure.

The network device involved in the embodiments of the present disclosure may be a base station. The base station may include multiple cells that provide services to terminals. Depending on the specific application scenario, the base station may be called access point, or may be a device in the access network that communicates over an air interface with wireless terminal devices through one or more sectors, or may be called another name. The network device may be used for converting the received radio frames into Internet protocol (IP) packets or vice versa, and serves as a router between the wireless terminals and the rest of the access network. The rest of the access network may include an IP communication network. The network device may also coordinate the attribute management of the air interface. For example, the network device involved in the embodiments of the present disclosure may be a base transceiver station (BTS) in the global system for mobile communications (GSM) or code division multiple access (CDMA), a NodeB in the wide-band code division multiple access (WCDMA), an evolved Node B (eNB or e-NodeB) in long term evolution (LTE) system, a 5G base station (gNB) in 5G network architecture (next generation system), a home evolved Node B (HeNB), a relay node, a femto, a pico, or the like, which is not limited herein. In some network architectures, the network device may include a centralized unit (CU) node and a distributed unit (DU) node, which may be geographically separated.

The network device and the terminal may each perform multi-input multi-output (MIMO) transmission with each other by using one or more antennas. The MIMO transmission may be single user MIMO (SU-MIMO) or multiple user MIMO (MU-MIMO). According to the configuration and quantity of antenna combinations, the MIMO transmission may be 2 dimensional-MIMO (2D-MIMO), 3 dimensional-MIMO (3D-MIMO), full dimensional-MIMO (FD-MIMO) or massive-MIMO (massive-MIMO), and may be diversity transmission, precoded transmission, beam forming transmission, or the like.

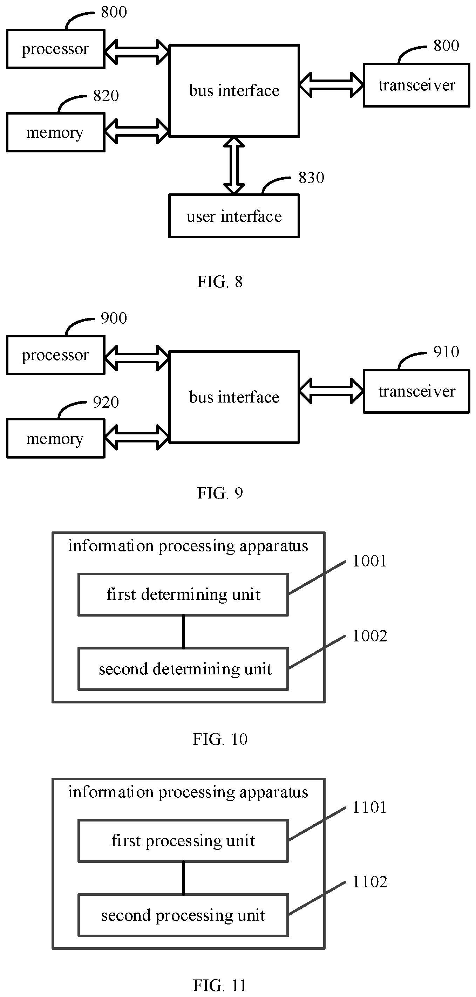

As shown in FIG. 8, an information processing apparatus is provided according to an embodiment of the present disclosure, which is applied to a terminal, and includes:

> a processor 800, configured to read a program from a memory 820 and execute the following process: determining a first symbol set; and determining validity of a transmission occasion and/or a reception occasion based on the first symbol set; and
> a transceiver 810, configured to receive and send data under the control of the processor 800.

In FIG. 6, the bus architecture may include any number of interconnected buses and bridges, specifically one or more processors represented by processor 600 and various circuits of memory represented by memory 620 are linked together. The bus architecture may also link various other circuits such as peripheral devices, voltage regulators, power management circuits, etc., which are well-known in the art, and therefore, no further descriptions are provided herein. The bus interface provides an interface. The transceiver 610 may be a plurality of elements, that is, include a transmitter and a receiver, and provide a unit for communicating with various other devices on a transmission medium. For different user equipment, the user interface 630 may also be an interface capable of externally or internally connecting to required equipment. The connected equipment includes but not limited to a keypad, a display, a speaker, a microphone, a joystick, and the like.

The processor 600 is responsible for managing the bus architecture and general processing, and the memory 620 may store data used by the processor 600 when performing operations.

The processor 600 may be a central processing unit (CPU), an application specific integrated circuit (ASIC), a field programmable gate array (FPGA) or a complex programmable logic device (CPLD). The processor may also adopt a multi-core architecture.

The processor calls the computer program stored in the memory to execute any of the methods provided by the embodiments of the present disclosure according to the obtained executable instructions. The processor and the memory may also be arranged physically separately.

In some embodiments, the first symbol set is used for switching between an SBFD symbol and a legacy symbol, and the legacy symbol includes one or more of an uplink symbol (U), a downlink symbol (D), or a flexible symbol (F).

In some embodiments, the processor 800 is further configured to read the computer program in the memory and perform the following operations: determining the first symbol set according to a protocol stipulation, where the protocol stipulation includes: taking K symbols before a set of consecutive SBFD symbols as the first symbol set; or, taking K symbols after a set of consecutive SBFD symbols as the first symbol set, where K is an integer greater than or equal to 0.

In some embodiments, the processor 800 is further configured to read the computer program in the memory and perform the following operations:

receiving first information sent by a network device, where the first information is used to indicate a quantity K of symbols in the first symbol set; obtaining a position of the first symbol set stipulated by a protocol, where the position of the first symbol set includes before a set of consecutive SBFD symbols or after a set of consecutive SBFD symbols; and based on the quantity K of symbols and the position of the first symbol set, determining K symbols before the set of consecutive SBFD symbols as the first symbol set, or, determining K symbols after the set of consecutive SBFD symbols as the first symbol set, where K is an integer greater than or equal to 0.

In some embodiments, the processor 800 is further configured to read the computer program in the memory and perform the following operations:

receiving second information sent by a network device, where the second information is used to indicate a position of each symbol included in the first symbol set; and determining the first symbol set based on the second information.

In some embodiments, the second information is further used to indicate information of the SBFD symbol.

In some embodiments, the processor 800 is further configured to read the computer program in the memory and perform the following operations:

receiving third information sent by a network device, where the third information is used to determine a first parameter, and the first parameter is used to determine a quantity K of symbols in the first symbol set; obtaining a position of the first symbol set stipulated by a protocol, where the position of the first symbol set includes before a set of consecutive SBFD symbols or after a set of consecutive SBFD symbols; and

based on the quantity K of symbols and the position of the first symbol set, taking K symbols before the set of consecutive SBFD symbols as the first symbol set, or taking K symbols after the set of consecutive SBFD symbols as the first symbol set, where K is an integer greater than or equal to 0.

In some embodiments, the K symbols of the first symbol set include: a symbol configured as a downlink symbol (D) and/or an uplink symbol (U).

In some embodiments, the processor 800 is further configured to read the computer program in the memory and perform one or more of the following operations:

discarding or delaying the transmission occasion and/or the reception occasion, in a case that at least one symbol corresponding to the transmission occasion and/or the reception occasion overlaps with at least one symbol in the first symbol set; performing rate matching on a part of the transmission occasion and/or the reception occasion that does not overlap with the first symbol set, in a case that at least one symbol corresponding to the transmission occasion and/or the reception occasion overlaps with at least one symbol in the first symbol set; discarding or delaying the transmission occasion, in a case that the transmission occasion overlaps with some or all of H symbols after the first symbol set; performing rate matching on a target symbol, in a case that at least one symbol corresponding to the transmission occasion overlaps with H symbols after the first symbol set, where the target symbol is a symbol of the transmission occasion that does not overlap with the first symbol set and the H symbols; or determining that a reception occasion on M symbols after the first symbol set is valid, where H and M are stipulated by a protocol or notified to the terminal by a network device, and H and M are integers greater than or equal to 0.

In some embodiments, the processor 800 is further configured to read the computer program in the memory and perform the following operations: determining that a transmission occasion on N symbols after the set of consecutive SBFD symbols is valid, where N is stipulated by a protocol or notified to the terminal by a network device, and N is an integer greater than or equal to 0.

In some embodiments, the processor 800 is further configured to read the computer program in the memory and perform the following operations:

receiving fourth information sent by a network device, where the fourth information is used to indicate information of the SBFD symbol; and

determining the set of consecutive SBFD symbols based on the fourth information.

It should be noted here that the above-mentioned apparatus provided in the embodiment of the present disclosure can implement all the method steps implemented in the above-mentioned method embodiment, and can achieve the same technical effect. The descriptions and beneficial effects of this embodiment that are the same as those in the method embodiment will not be described in detail here.

As shown in FIG. 9, an information processing apparatus is provided according to an embodiment of the present disclosure, which is applied to a network device, and includes:

a processor 900, configured to read a program in a memory 920 and execute the following processes: determining a first symbol set, and/or, sending indication information to a terminal, where the indication information is used to determine the first symbol set; and determining validity of a transmission occasion and/or a reception occasion based on the first symbol set; and
a transceiver 910, configured to receive and send data under the control of the processor 900.

In FIG. 9, the bus architecture may include any number of interconnected buses and bridges, specifically one or more processors represented by processor 900 and various circuits of memory represented by memory 920 are linked together. The bus architecture may also link various other circuits such as peripheral devices, voltage regulators, power management circuits, etc., which are well-known in the art, and therefore, no further descriptions are provided herein. The bus interface provides an interface. The transceiver 910 may include a plurality of components, that is, including a transmitter and a receiver, providing a unit for communicating with various other devices on a transmission medium. The processor 900 is responsible for managing the bus architecture and general processing, and the memory 920 may store data used by the processor 900 when performing operations.

The processor 900 may be a CPU, an ASIC, an FPGA or a CPLD, and the processor may also adopt a multi-core architecture.

The processor 900 is responsible for managing the bus architecture and general processing, and the memory 920 may store data used by the processor 900 when performing operations.

In some embodiments, the first symbol set is used for switching between an SBFD symbol and a legacy symbol, and the legacy symbol includes one or more of an uplink symbol (U), a downlink symbol (D), or a flexible symbol (F).

In some embodiments, the processor 900 is further configured to read the computer program in the memory and perform the following operations:

sending first information to the terminal, where the first information is used to indicate a quantity K of symbols in the first symbol set; or,
sending second information to the terminal, where the second information is used to indicate a position of each symbol included in the first symbol set; or, sending third information to the terminal, where the third information is used to determine a first parameter, and the first parameter is used to determine a quantity K of symbols in the first symbol set, where K is an integer greater than or equal to 0.

In some embodiments, the second information is further used to indicate information of the set of consecutive SBFD symbols; or, the processor 900 is further configured to read the computer program in the memory and perform the following operations: sending fourth information to the terminal, where the fourth information is used to indicate information of the SBFD symbol.

In some embodiments, the processor 900 is further configured to read the computer program in the memory and perform the following operations: determining the first symbol set according to a protocol stipulation, where the protocol stipulation includes: taking K symbols before a set of consecutive SBFD symbols as the first symbol set; or, taking K symbols after a set of consecutive SBFD symbols as the first symbol set, where K is an integer greater than or equal to 0.

In some embodiments, the K symbols of the first symbol set include: a symbol configured as a downlink symbol (D) and/or an uplink symbol (U).

In some embodiments, the processor 900 is further configured to read the computer program in the memory and perform one or more of the following operations:

discarding or delaying the transmission occasion and/or the reception occasion, in a case that at least one symbol corresponding to the transmission occasion and/or the reception occasion overlaps with at least one symbol in the first symbol set;
performing rate matching on a part of the transmission occasion and/or the reception occasion that does not overlap with the first symbol set, in a case that at least one symbol corresponding to the transmission occasion and/or the reception occasion overlaps with at least one symbol in the first symbol set;
discarding or delaying the transmission occasion, in a case that the transmission occasion overlaps with some or all of H symbols after the first symbol set;
performing rate matching on a target symbol, in a case that at least one symbol corresponding to the transmission occasion overlaps with H symbols after the first symbol set, where the target symbol is a symbol of the transmission occasion that does not overlap with the first symbol set and the H symbols; or

determining that a reception occasion on M symbols after the first symbol set is valid, where H and M are stipulated by a protocol or notified to the terminal by the network device, and H and M are integers greater than or equal to 0.

In some embodiments, the processor 900 is further configured to read the computer program in the memory and perform the following operations: determining that a reception occasion on N symbols after the set of consecutive SBFD symbols is valid, where N is stipulated by a protocol or notified to the terminal by the network device, and N is an integer greater than or equal to 0.

It should be noted here that the above-mentioned apparatus provided in the embodiment of the present disclosure can implement all the method steps implemented in the above-mentioned method embodiment, and can achieve the same technical effect. The descriptions and beneficial effects of this embodiment that are the same as those in the method embodiment will not be described in detail here.

As shown in FIG. 10, an information processing apparatus is provided by an embodiment of the present disclosure, which is applied to a terminal, and includes: a first determining unit 1001, configured to determine a first symbol set; and a second determining unit 1002, configured to determine validity of a transmission occasion and/or a reception occasion based on the first symbol set.

In some embodiments, the first symbol set is used for switching between an SBFD symbol and a legacy symbol, and the legacy symbol includes one or more of an uplink symbol (U), a downlink symbol (D), or a flexible symbol (F).

In some embodiments, the first determining unit is further configured to: determine the first symbol set according to a protocol stipulation, where the protocol stipulation includes: taking K symbols before a set of consecutive SBFD symbols as the first symbol set; or, taking K symbols after a set of consecutive SBFD symbols as the first symbol set, where K is an integer greater than or equal to 0. In some embodiments, the first determining unit is further configured to:

In some embodiments, the first determining unit is further configured to:

receive first information sent by a network device, where the first information is used to indicate a quantity K of symbols in the first symbol set; obtain a position of the first symbol set stipulated by a protocol, where the position of the first symbol set includes before a set of consecutive SBFD symbols or after a set of consecutive SBFD symbols; and based on the quantity K of symbols and the position of the first symbol set, determine K symbols before the set of consecutive SBFD symbols as the first symbol set, or, determine K symbols after the set of consecutive SBFD symbols as the first symbol set, where K is an integer greater than or equal to 0.

In some embodiments, the first determining unit is further configured to:

receive second information sent by a network device, where the second information is used to indicate a position of each symbol included in the first symbol set; and determine the first symbol set based on the second information.

In some embodiments, the second information is further used to indicate information of the set of consecutive SBFD symbols.

In some embodiments, the first determining unit is further configured to:

receive third information sent by a network device, where the third information is used to determine a first parameter, and the first parameter is used to determine a quantity K of symbols in the first symbol set; obtain a position of the first symbol set stipulated by a protocol, where the position of the first symbol set includes before a set of consecutive SBFD symbols or after a set of consecutive SBFD symbols; and based on the quantity K of symbols and the position of the first symbol set, take K symbols before the set of consecutive SBFD symbols as the first symbol set, or take K symbols after the set of consecutive SBFD symbols as the first symbol set, where K is an integer greater than or equal to 0.

In some embodiments, the K symbols of the first symbol set include: a symbol configured as a downlink symbol (D) and/or an uplink symbol (U).

In some embodiments, the second determining unit is further configured to:

discard or delay the transmission occasion and/or the reception occasion, in a case that at least one symbol corresponding to the transmission occasion and/or the reception occasion overlaps with at least one symbol in the first symbol set; perform rate matching on a part of the transmission occasion and/or the reception occasion that does not overlap with the first symbol set, in a case that at least one symbol corresponding to the transmission occasion and/or the reception occasion overlaps with at least one symbol in the first symbol set; discard or delay the transmission occasion, in a case that the transmission occasion overlaps with some or all of H symbols after the first symbol set; perform rate matching on a target symbol, in a case that at least one symbol corresponding to the transmission occasion overlaps with H symbols after the first symbol set, where the target symbol is a symbol of the transmission occasion that does not overlap with the first symbol set and the H symbols; or determine that a reception occasion on M symbols after the first symbol set is valid, where H and M are stipulated by a protocol or notified to the terminal by a network device, and H and M are integers greater than or equal to 0.

In some embodiments, the second determining unit is further configured to: determine that a transmission occasion on N symbols after the set of consecutive SBFD symbols is valid, where N is stipulated by a protocol or notified to the terminal by a network device, and N is an integer greater than or equal to 0.

In some embodiments, the apparatus may further include:

a first receiving unit, configured to receive fourth information sent by a network device, where the fourth information is used to indicate information of the SBFD symbol; and
a third determining unit, configured to determine the set of consecutive SBFD symbols based on the fourth information.

It should be noted here that the above-mentioned apparatus provided by the embodiment of the present disclosure can implement all the method steps implemented by the above-mentioned method embodiment, and can achieve the same technical effect. The descriptions and the beneficial effects of this embodiment that are the same as those of the method embodiment will not be described in detail here.

As shown in FIG. 11, an information processing apparatus is provided according to an embodiment of the present disclosure, which is applied to a network device, and includes: a first processing unit 1101, configured to determine a first symbol set, and/or, send indication information to a terminal, where the indication information is used to determine the first symbol set; and a second processing unit 1102, configured to determine validity of a transmission occasion and/or a reception occasion based on the first symbol set.

In some embodiments, the first symbol set is used for switching between an SBFD symbol and a legacy symbol, and the legacy symbol includes one or more of an uplink symbol (U), a downlink symbol (D), or a flexible symbol (F).

In some embodiments, the first processing unit is further configured to:

send first information to the terminal, where the first information is used to indicate a quantity K of symbols in the first symbol set; or,
send second information to the terminal, where the second information is used to indicate a position of each symbol included in the first symbol set; or,

send third information to the terminal, where the third information is used to determine a first parameter, and the first parameter is used to determine a quantity K of symbols in the first symbol set, where K is an integer greater than or equal to 0.

In some embodiments, the second information is further used to indicate information of the SBFD symbol; alternatively, in some embodiments, the first processing unit is further configured to: send fourth information to the terminal, where the fourth information is used to indicate information of the SBFD symbol.

In some embodiments, the first processing unit is further configured to: determine the first symbol set according to a protocol stipulation, where the protocol stipulation includes: taking K symbols before a set of consecutive SBFD symbols as the first symbol set; or, taking K symbols after a set of consecutive SBFD symbols as the first symbol set, where K is an integer greater than or equal to 0.

In some embodiments, the K symbols of the first symbol set include: a symbol configured as a downlink symbol (D) and/or an uplink symbol (U).

In some embodiments, the second processing unit is further configured to:

discard or delay the transmission occasion and/or the reception occasion, in a case that at least one symbol corresponding to the transmission occasion and/or the reception occasion overlaps with at least one symbol in the first symbol set;
perform rate matching on a part of the transmission occasion and/or the reception occasion that does not overlap with the first symbol set, in a case that at least one symbol corresponding to the transmission occasion and/or the reception occasion overlaps with at least one symbol in the first symbol set;
discard or delay the transmission occasion, in a case that the transmission occasion overlaps with some or all of H symbols after the first symbol set;
perform rate matching on a target symbol, in a case that at least one symbol corresponding to the transmission occasion overlaps with H symbols after the first symbol set, where the target symbol is a symbol of the transmission occasion that does not overlap with the first symbol set and the H symbols; or
determine that a reception occasion on M symbols after the first symbol set is valid, where H and M are stipulated by a protocol or notified to the terminal by the network device, and H and M are integers greater than or equal to 0.

In some embodiments, the second processing unit is further configured to: determine that a reception occasion on N symbols after the set of consecutive SBFD symbols is valid, where N is stipulated by a protocol or notified to the terminal by the network device, and N is an integer greater than or equal to 0.

It should be noted here that the above-mentioned apparatus provided in the embodiment of the present disclosure can implement all the method steps implemented in the above-mentioned method embodiment, and can achieve the same technical effect. The descriptions and the beneficial effects of this embodiment that are the same as those in the method embodiment will not be described in detail here.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present disclosure. The aforementioned storage media include: universal serial bus (USB) flash drive, removable hard disk, read-only memory (ROM), random access memory (RAM), magnetic disk, optical disc or other media that can store program codes.

An embodiment of the present disclosure further provides a processor-readable storage medium, where the processor-readable storage medium stores a computer program. The computer program is configured to cause the processor to execute the above information transmission method on the side of the terminal. Alternatively, the computer program is configured to cause the processor to execute the above information transmission method on the side of the network device.

The processor-readable storage medium may be any available medium or data storage device that can be accessed by the processor, including but not limited to magnetic storage (such as floppy disk, hard disk, magnetic tape, magneto-optical disk (MO)), optical storage (such as compact disc (CD), digital versatile disc (DVD), blue-ray disc (BD), high-definition versatile disc (HVD)), and semiconductor memory (such as ROM, erasable programmable ROM (EPROM), electrically erasable programmable ROM (EEPROM), non-volatile memory (NAND FLASH), solid-state drive (SSD)), etc.

It should be noted that the terms "include", "include", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of the present invention essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this disclosure.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (ASIC), or one or more microprocessors (digital signal processor, DSP), or one or more field programmable gate arrays (FPGA). As another example, when a module described above is implemented in the form of program codes called by a processing element, the processing element may be a general-purpose processor, such as a central processing unit (CPU) or other processors that may call program codes. As another example, these modules may be integrated together and implemented as a system-on-a-chip (SOC).

Terms such as "first" and "second" in the specification and the claims of the present disclosure are used for distinguishing similar objects and are not necessarily used for describing a specific order or sequence. It should be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C means 7 situations including: A alone, B alone, C alone, both A and B, both B and C, both A and C, and all of A, B and C. Similarly, the use of "at least one of A and B" in this specification and claims should be understood as "A alone, B alone, or both A and B".

The embodiments of the present disclosure are described above in conjunction with the accompanying drawings, but the present disclosure is not limited to the above-mentioned specific implementations. The above-mentioned specific implementations are merely illustrative and not restrictive. Under the guidance of the present disclosure, person of ordinary skill in the art can also make many forms without departing from the protection scope of the present disclosure and the claims, all of which shall fall within the protection scope of the present disclosure.

**Claims**

1. An information processing method, applied to a terminal, comprising:

   determining a first symbol set; and
   determining validity of a transmission occasion and/or a reception occasion based on the first symbol set.

2. The method according to claim 1, wherein the first symbol set is used for switching between a sub-band full duplex (SBFD) symbol and a legacy symbol, and the legacy symbol comprises one or more of an uplink symbol (U), a downlink symbol (D), or a flexible symbol (F).

3. The method according to claim 1, wherein the determining the first symbol set comprises: determining the first symbol set according to a protocol stipulation, wherein the protocol stipulation includes:

   taking K symbols before a set of consecutive SBFD symbols as the first symbol set; or,
   taking K symbols after a set of consecutive SBFD symbols as the first symbol set,
   wherein K is an integer greater than or equal to 0.

4. The method according to claim 1, wherein the determining the first symbol set comprises:

   receiving first information sent by a network device, wherein the first information is used to indicate a quantity K of symbols in the first symbol set;
   obtaining a position of the first symbol set stipulated by a protocol, wherein the position of the first symbol set includes before a set of consecutive SBFD symbols or after a set of consecutive SBFD symbols; and
   based on the quantity K of symbols and the position of the first symbol set, determining K symbols before the set of consecutive SBFD symbols as the first symbol set, or, determining K symbols after the set of consecutive SBFD symbols as the first symbol set,
   wherein K is an integer greater than or equal to 0.

5. The method according to claim 1, wherein the determining the first symbol set comprises:

   receiving second information sent by a network device, wherein the second information is used to indicate a position of each symbol included in the first symbol set; and
   determining the first symbol set based on the second information.

6. The method according to claim 5, wherein the second information is further used to indicate information of the SBFD symbol.

7. The method according to claim 1, wherein the determining the first symbol set comprises:

   receiving third information sent by a network device, wherein the third information is used to determine a first parameter, and the first parameter is used to determine a quantity K of symbols in the first symbol set;

obtaining a position of the first symbol set stipulated by a protocol, wherein the position of the first symbol set includes before a set of consecutive SBFD symbols or after a set of consecutive SBFD symbols; and

based on the quantity K of symbols and the position of the first symbol set, taking K symbols before the set of consecutive SBFD symbols as the first symbol set, or taking K symbols after the set of consecutive SBFD symbols as the first symbol set,

wherein K is an integer greater than or equal to 0.

8. The method according to any one of claims 3 to 7, wherein the K symbols of the first symbol set comprise:
a symbol configured as a downlink symbol (D) and/or an uplink symbol (U).

9. The method according to claim 1, wherein the determining the validity of the transmission occasion and/or the reception occasion based on the first symbol set comprises one or more of the following:

discarding or delaying the transmission occasion and/or the reception occasion, in a case that at least one symbol corresponding to the transmission occasion and/or the reception occasion overlaps with at least one symbol in the first symbol set;

performing rate matching on a part of the transmission occasion and/or the reception occasion that does not overlap with the first symbol set, in a case that at least one symbol corresponding to the transmission occasion and/or the reception occasion overlaps with at least one symbol in the first symbol set;

discarding or delaying the transmission occasion, in a case that the transmission occasion overlaps with some or all of H symbols after the first symbol set;

performing rate matching on a target symbol, in a case that at least one symbol corresponding to the transmission occasion overlaps with H symbols after the first symbol set, wherein the target symbol is a symbol of the transmission occasion that does not overlap with the first symbol set and the H symbols; or

determining that a reception occasion on M symbols after the first symbol set is valid,

wherein H and M are stipulated by a protocol or notified to the terminal by a network device, and H and M are integers greater than or equal to 0.

10. The method according to claim 3, further comprising:
determining that a transmission occasion on N symbols after the set of consecutive SBFD symbols is valid, wherein N is stipulated by a protocol or notified to the terminal by a network device, and N is an integer greater than or equal to 0.

11. The method according to claim 3, further comprising:

receiving fourth information sent by a network device, wherein the fourth information is used to indicate information of the SBFD symbol; and determining the set of consecutive SBFD symbols based on the fourth information.

12. An information processing method, applied to a network device, comprising:

determining a first symbol set, and/or, sending indication information to a terminal, wherein the indication information is used to determine the first symbol set; and

determining validity of a transmission occasion and/or a reception occasion based on the first symbol set.

13. The method according to claim 12, wherein the first symbol set is used for switching between an SBFD symbol and a legacy symbol, and the legacy symbol comprises one or more of an uplink symbol (U), a downlink symbol (D), or a flexible symbol (F).

14. The method according to claim 12, wherein the sending the indication information to the terminal comprises:

sending first information to the terminal, wherein the first information is used to indicate a quantity K of symbols in the first symbol set; or,

sending second information to the terminal, wherein the second information is used to indicate a position of each symbol included in the first symbol set; or,

sending third information to the terminal, wherein the third information is used to determine a first parameter, and the first parameter is used to determine a quantity K of symbols in the first symbol set,

wherein K is an integer greater than or equal to 0.

15. The method according to claim 14, wherein the second information is further used to indicate information of the SBFD symbol; or,
the method further comprises: sending fourth information to the terminal, wherein the fourth information is used to indicate information of the SBFD symbol.

16. The method according to claim 12, wherein the determining the first symbol set comprises: determining the first symbol set according to a protocol stipulation, wherein the protocol stipulation includes:

taking K symbols before a set of consecutive SBFD symbols as the first symbol set; or,
taking K symbols after a set of consecutive SBFD symbols as the first symbol set,
wherein K is an integer greater than or equal to 0.

17. The method according to any one of claims 14 to 16, wherein the K symbols of the first symbol set comprise:
a symbol configured as a downlink symbol (D) and/or an uplink symbol (U).

18. The method according to claim 12, wherein the determining the validity of the transmission occasion and/or the reception occasion based on the first symbol set comprises one or more of the following:

discarding or delaying the transmission occasion and/or the reception occasion, in a case that at least one symbol corresponding to the transmission occasion and/or the reception occasion overlaps with at least one symbol in the first symbol set;
performing rate matching on a part of the transmission occasion and/or the reception occasion that does not overlap with the first symbol set, in a case that at least one symbol corresponding to the transmission occasion and/or the reception occasion overlaps with at least one symbol in the first symbol set;
discarding or delaying the transmission occasion, in a case that the transmission occasion overlaps with some or all of H symbols after the first symbol set;
performing rate matching on a target symbol, in a case that at least one symbol corresponding to the transmission occasion overlaps with H symbols after the first symbol set, wherein the target symbol is a symbol of the transmission occasion that does not overlap with the first symbol set and the H symbols; or
determining that a reception occasion on M symbols after the first symbol set is valid,
wherein H and M are stipulated by a protocol or notified to the terminal by the network device, and H and M are integers greater than or equal to 0.

19. The method according to claim 16, further comprising:
determining that a reception occasion on N symbols after the set of consecutive SBFD symbols is valid, wherein N is stipulated by a protocol or notified to the terminal by the network device, and N is an integer greater than or equal to 0.

20. An information processing apparatus, applied to a terminal, comprising: a memory, a transceiver and a processor, wherein the memory is configured to store a computer program; the transceiver is configured to transmit and receive data under the control of the processor; the processor is configured to read the computer program from the memory and execute the following operations:

determining a first symbol set; and
determining validity of a transmission occasion and/or a reception occasion based on the first symbol set.

21. The apparatus according to claim 20, wherein the first symbol set is used for switching between a sub-band full duplex (SBFD) symbol and a legacy symbol, and the legacy symbol comprises one or more of an uplink symbol (U), a downlink symbol (D), or a flexible symbol (F).

22. The apparatus according to claim 20, wherein the processor is further configured to read the computer program from the memory and execute the following operations:
determining the first symbol set according to a protocol stipulation, wherein the protocol stipulation includes:

taking K symbols before a set of consecutive SBFD symbols as the first symbol set; or,
taking K symbols after a set of consecutive SBFD symbols as the first symbol set,
wherein K is an integer greater than or equal to 0.

23. The apparatus according to claim 20, wherein the processor is further configured to read the computer program from the memory and execute the following operations:

receiving first information sent by a network device, wherein the first information is used to indicate a quantity K of symbols in the first symbol set;
obtaining a position of the first symbol set stipulated by a protocol, wherein the position of the first symbol set includes before a set of consecutive SBFD symbols or after a set of consecutive SBFD symbols; and
based on the quantity K of symbols and the position of the first symbol set, determining K symbols before the set of consecutive SBFD symbols as the first symbol set, or, determining K symbols after the set of consecutive SBFD symbols as the first symbol set,
wherein K is an integer greater than or equal to 0.

24. The apparatus according to claim 20, wherein the processor is further configured to read the computer program from the memory and execute the following operations:

receiving second information sent by a network device, wherein the second information is used to indicate a position of each symbol included in the first symbol set; and
determining the first symbol set based on the second information.

25. The apparatus according to claim 24, wherein the second information is further used to indicate information of the SBFD symbol.

26. The apparatus according to claim 20, wherein the processor is further configured to read the computer program from the memory and execute the following operations:

receiving third information sent by a network device, wherein the third information is used to determine a first parameter, and the first parameter is used to determine a quantity K of symbols in the first symbol set;
obtaining a position of the first symbol set stipulated by a protocol, wherein the position of the first symbol set includes before a set of consecutive SBFD symbols or after a set of consecutive SBFD symbols; and
based on the quantity K of symbols and the position of the first symbol set, taking K symbols before the set of consecutive SBFD symbols as the first symbol set, or taking K symbols after the set of consecutive SBFD symbols as the first symbol set,
wherein K is an integer greater than or equal to 0.

27. The device according to any one of claims 22 to 26, wherein the K symbols of the first symbol set comprise:
a symbol configured as a downlink symbol (D) and/or an uplink symbol (U).

28. The apparatus according to claim 20, wherein the processor is further configured to read the computer program from the memory and perform one or more of the following operations:

discarding or delaying the transmission occasion and/or the reception occasion, in a case that at least one symbol corresponding to the transmission occasion and/or the reception occasion overlaps with at least one symbol in the first symbol set;
performing rate matching on a part of the transmission occasion and/or the reception occasion that does not overlap with the first symbol set, in a case that at least one symbol corresponding to the transmission occasion and/or the reception occasion overlaps with at least one symbol in the first symbol set;
discarding or delaying the transmission occasion, in a case that the transmission occasion overlaps with some or all of H symbols after the first symbol set;
performing rate matching on a target symbol, in a case that at least one symbol corresponding to the transmission occasion overlaps with H symbols after the first symbol set, wherein the target symbol is a symbol of the transmission occasion that does not overlap with the first symbol set and the H symbols; or
determining that a reception occasion on M symbols after the first symbol set is valid,
wherein H and M are stipulated by a protocol or notified to the terminal by a network device, and H and M are integers greater than or equal to 0.

29. The apparatus according to claim 22, wherein the processor is further configured to read the computer program from the memory and execute the following operations:
determining that a transmission occasion on N symbols after the set of consecutive SBFD symbols is valid, wherein N is stipulated by a protocol or notified to the terminal by a network device, and N is an integer greater than or equal to 0.

30. The apparatus according to claim 22, wherein the processor is further configured to read the computer program in the memory and perform the following operations:

receiving fourth information sent by a network device, wherein the fourth information is used to indicate information of the SBFD symbol; and
determining the set of consecutive SBFD symbols based on the fourth information.

31. An information processing apparatus, applied to a network device, comprising: a memory, a transceiver and a processor, wherein the memory is configured to store a computer program; the transceiver is configured to transmit and receive data under the control of the processor; the processor is configured to read the computer program from the memory and execute the following operations:

determining a first symbol set, and/or, sending indication information to a terminal, wherein the indication information is used to determine the first symbol set; and
determining validity of a transmission occasion and/or a reception occasion based on the first symbol set.

32. The apparatus according to claim 31, wherein the first symbol set is used for switching between an SBFD symbol and a legacy symbol, and the legacy symbol comprises one or more of an uplink symbol (U), a downlink symbol (D), or a flexible symbol (F).

33. The apparatus according to claim 31, wherein the processor is further configured to read the computer program from the memory and execute the following operations:

sending first information to the terminal, wherein the first information is used to indicate a quantity K of symbols in the first symbol set; or, sending second information to the terminal, wherein the second information is used to indicate a position of each symbol included in the first symbol set; or, sending third information to the terminal, wherein the third information is used to determine a first parameter, and the first parameter is used to determine a quantity K of symbols in the first symbol set, wherein K is an integer greater than or equal to 0.

34. The apparatus according to claim 33, wherein the second information is further used to indicate information of the SBFD symbol; or the processor is further configured to read the computer program in the memory and perform the following operations: sending fourth information to the terminal, wherein the fourth information is used to indicate information of the SBFD symbol.

35. The apparatus according to claim 31, wherein the processor is further configured to read the computer program from the memory and execute the following operations: determining the first symbol set according to a protocol stipulation, wherein the protocol stipulation includes:

taking K symbols before a set of consecutive SBFD symbols as the first symbol set; or, taking K symbols after a set of consecutive SBFD symbols as the first symbol set, wherein K is an integer greater than or equal to 0.

36. The device according to any one of claims 33 to 35, wherein the K symbols of the first symbol set comprise: a symbol configured as a downlink symbol (D) and/or an uplink symbol (U).

37. The apparatus according to claim 31, wherein the processor is further configured to read the computer program in the memory and perform one or more of the following operations:

discarding or delaying the transmission occasion and/or the reception occasion, in a case that at least one symbol corresponding to the transmission occasion and/or the reception occasion overlaps with at least one symbol in the first symbol set; performing rate matching on a part of the transmission occasion and/or the reception occasion that does not overlap with the first symbol set, in a case that at least one symbol corresponding to the transmission occasion and/or the reception occasion overlaps with at least one symbol in the first symbol set; discarding or delaying the transmission occasion, in a case that the transmission occasion overlaps with some or all of H symbols after the first symbol set; performing rate matching on a target symbol, in a case that at least one symbol corresponding to the transmission occasion overlaps with H symbols after the first symbol set, wherein the target symbol is a symbol of the transmission occasion that does not overlap with the first symbol set and the H symbols; or determining that a reception occasion on M symbols after the first symbol set is valid, wherein H and M are stipulated by a protocol or notified to the terminal by the network device, and H and M are integers greater than or equal to 0.

38. The apparatus according to claim 35, wherein the processor is further configured to read the computer program from the memory and perform one or more of the following operations: determining a reception occasion on N symbols after the set of consecutive SBFD symbols is valid, wherein N is stipulated by a protocol or notified to the terminal by the network device, and N is an integer greater than or equal to 0.

39. An information processing apparatus, applied to a terminal, comprising:

a first determining unit, configured to determine a first symbol set; and a second determining unit, configured to determine validity of a transmission occasion and/or a reception occasion based on the first symbol set.

40. The apparatus according to claim 39, wherein the first symbol set is used for switching between a SBFD symbol and a legacy symbol, and the legacy symbol comprises one or more of an uplink symbol (U), a downlink symbol (D), or a flexible symbol (F).

41. The apparatus according to claim 39, wherein the first determining unit is further configured to determine the first symbol set according to a protocol stipulation, wherein the protocol stipulation includes:

taking K symbols before a set of consecutive SBFD symbols as the first symbol set; or, taking K symbols after a set of consecutive SBFD symbols as the first symbol set, wherein K is an integer greater than or equal to 0.

42. The apparatus according to claim 39, wherein the first determining unit is further configured to:

receive first information sent by a network device, wherein the first information is used to indicate a quantity K of symbols in the first symbol set; obtain a position of the first symbol set stipulated by a protocol, wherein the position of the first symbol set includes before a set of consecutive SBFD symbols or after a set of consecutive SBFD symbols; and based on the quantity K of symbols and the position of the first symbol set, determine K symbols before the set of consecutive SBFD symbols as the first symbol set, or, determine K symbols after the set of consecutive SBFD symbols as the first symbol set, wherein K is an integer greater than or equal to 0.

43. The apparatus according to claim 39, wherein the first determining unit is further configured to:

receive second information sent by a network device, wherein the second information is used to indicate a position of each symbol included in the first symbol set; and determine the first symbol set based on the second information.

44. The apparatus according to claim 43, wherein the second information is further used to indicate information of the set of consecutive SBFD symbols.

45. The apparatus according to claim 39, wherein the first determining unit is further configured to:

receive third information sent by a network device, wherein the third information is used to determine a first parameter, and the first parameter is used to determine a quantity K of symbols in the first symbol set; obtain a position of the first symbol set stipulated by a protocol, wherein the position of the first symbol set includes before a set of consecutive SBFD symbols or after a set of consecutive SBFD symbols; and based on the quantity K of symbols and the position of the first symbol set, take K symbols before the set of consecutive SBFD symbols as the first symbol set, or take K symbols after the set of consecutive SBFD symbols as the first symbol set, wherein K is an integer greater than or equal to 0.

46. The device according to any one of claims 41 to 45, wherein the K symbols of the first symbol set comprise:
a symbol configured as a downlink symbol (D) and/or an uplink symbol (U).

47. The apparatus according to claim 39, wherein the second determining unit is further configured for one or more of the following:

discarding or delaying the transmission occasion and/or the reception occasion, in a case that at least one symbol corresponding to the transmission occasion and/or the reception occasion overlaps with at least one symbol in the first symbol set; performing rate matching on a part of the transmission occasion and/or the reception occasion that does not overlap with the first symbol set, in a case that at least one symbol corresponding to the transmission occasion and/or the reception occasion overlaps with at least one symbol in the first symbol set; discarding or delaying the transmission occasion, in a case that the transmission occasion overlaps with some or all of H symbols after the first symbol set; performing rate matching on a target symbol, in a case that at least one symbol corresponding to the transmission occasion overlaps with H symbols after the first symbol set, wherein the target symbol is a symbol of the transmission occasion that does not overlap with the first symbol set and the H symbols; determining that a reception occasion on M symbols after the first symbol set is valid, wherein H and M are stipulated by a protocol or notified to the terminal by a network device, and H and M are integers greater than or equal to 0.

48. The apparatus according to claim 41, wherein the second determining unit is further configured to:
determine that a transmission occasion on N symbols after the set of consecutive SBFD symbols is valid, wherein N is stipulated by a protocol or notified to the terminal by a network device, and N is an integer greater than or equal to 0.

49. The apparatus according to claim 41, further comprising:

a first receiving unit, configured to receive fourth information sent by a network device, wherein the fourth information is used to indicate information of the SBFD symbol; and
a third determining unit, configured to determine the set of consecutive SBFD symbols based on the fourth information.

50. An information processing apparatus, applied to network device, comprising:

a first processing unit, configured to determine a first symbol set, and/or, send indication information to a terminal, wherein the indication information is used to determine the first symbol set; and
a second processing unit, configured to determine validity of a transmission occasion and/or a reception occasion based on the first symbol set.

51. The apparatus according to claim 50, wherein the first symbol set is used for switching between an SBFD symbol and a legacy symbol, and the legacy symbol comprises one or more of an uplink symbol (U), a downlink symbol (D), or a flexible symbol (F).

52. The apparatus according to claim 50, wherein the first processing unit is further configured to:

send first information to the terminal, wherein the first information is used to indicate a quantity K of symbols in the first symbol set; or,
send second information to the terminal, wherein the second information is used to indicate a position of each symbol included in the first symbol set; or,
send third information to the terminal, wherein the third information is used to determine a first parameter, and the first parameter is used to determine a quantity K of symbols in the first symbol set,
wherein K is an integer greater than or equal to 0.

53. The apparatus according to claim 52, wherein the second information is further used to indicate information of the SBFD symbol; or,
the first processing unit is further configured to send fourth information to the terminal, wherein the fourth information is used to indicate information of the SBFD symbol.

54. The apparatus according to claim 50, wherein the first processing unit is further configured to determine the first symbol set according to a protocol stipulation, wherein the protocol stipulation includes:

take K symbols before a set of consecutive SBFD symbols as the first symbol set; or,
take K symbols after a set of consecutive SBFD symbols as the first symbol set,
wherein K is an integer greater than or equal to 0.

55. The device according to any one of claims 52 to 54, wherein the K symbols of the first symbol set comprise:
a symbol configured as a downlink symbol (D) and/or an uplink symbol (U).

56. The apparatus according to claim 50, wherein the second processing unit is further configured for one or more of the following:

discarding or delaying the transmission occasion and/or the reception occasion, in a case that at least one symbol corresponding to the transmission occasion and/or the reception occasion overlaps with at least one symbol in the first symbol set;
performing rate matching on a part of the transmission occasion and/or the reception occasion that does not overlap with the first symbol set, in a case that at least one symbol corresponding to the transmission occasion and/or the reception occasion overlaps with at least one symbol in the first symbol set;
discarding or delaying the transmission occasion, in a case that the transmission occasion overlaps with some or all of H symbols after the first symbol set;
performing rate matching on a target symbol, in a case that at least one symbol corresponding to the transmission occasion overlaps with H symbols after the first symbol set, wherein the target symbol is a symbol of the transmission occasion that does not overlap with the first symbol set and the H symbols; or
determining that a reception occasion on M symbols after the first symbol set is valid,
wherein H and M are stipulated by a protocol or notified to the terminal by the network device, and H and M are integers greater than or equal to 0.

57. The apparatus according to claim 54, wherein the second processing unit is further configured to determine that a reception occasion on N symbols after the set of consecutive SBFD symbols is valid, wherein N is stipulated by a protocol or notified to the terminal by the network device, and N is an integer greater than or equal to 0.

58. A processor-readable storage medium, wherein the processor-readable storage medium stores a computer program, and the computer program is configured to cause the processor to perform the method

**EP 4 761 445 A1**

according to any one of claims 1 to 19.

determining a first symbol set | 101

determining validity of a transmission occasion and/or a reception occasion based on the first symbol set | 102

FIG. 1

determining a first symbol set, and/or, sending indication information to a terminal | 201

determining validity of a transmission occasion and/or a reception occasion based on the first symbol set | 202

FIG. 2

| Slot n | Slot n+1 | Slot n+2 | Slot n+3 | Slot n+4 | Slot n+5 | Slot n+6 | Slot n+7 | Slot n+8 | Slot n+9 |
|--------|----------|----------|----------|----------|----------|----------|----------|----------|----------|
| D | D | D | S | U | D | D | D | S | U |

Gap

TA-offset

Gap

frame structure

T_switch

32

TA-offset

Gap

TA-offset

timing relation on base station

Gap

T_switch_gNB

T

T

T_switch_UE

timing relation on UE

31

FIG. 3

27

EP 4 761 445 A1

| Slot n | Slot n+1 | Slot n+2 | Slot n+3 | Slot n+4 | Slot n+5 | Slot n+6 | Slot n+7 | Slot n+8 | Slot n+9 |

FIG. 4

FIG. 5

| Slot n+0 | Slot n+1 | Slot n+2 | Slot n+3 | Slot n+4 |
| D | D | D | S | U |

Gap

frame structure

62

TA-offset

61

timing relation on base station

T_Switch_gNB

61

T

T

T

T_Switch_UE

timing relation on UE

63

FIG. 6

FIG. 7

FIG. 8

FIG. 9

FIG. 10

FIG. 11

## INTERNATIONAL SEARCH REPORT

| International application No. |
| --- |
| **PCT/CN2024/099519** |

| A. | CLASSIFICATION OF SUBJECT MATTER |
| --- | --- |

H04W 72/50(2023.01)i

According to International Patent Classification (IPC) or to both national classification and IPC

| B. | FIELDS SEARCHED |
| --- | --- |

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS: CNKI; CNTXT; VEN; USTXT; WOTXT; EPTXT; 3GPP; IEEE; IETF: 子带全双工, 未重叠, 切换, 传统, 符号, 有效性, 丢弃, 延迟, sub-band full duplex, SBFD, non overlap, switch, handover, legacy, symbol, drop, delay, valid

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | ZTE. "Discussion of Subband Non-Overlapping Full Duplex" *3GPP TSG RAN WG1 #109-E, R1-2203204*, 28 April 2022 (2022-04-28), section 3.3 | 1, 5, 12, 14, 15, 20, 24, 31, 33, 34, 39, 43, 50, 52, 53, 58 |
| A | US 2021352667 A1 (QUALCOMM INC.) 11 November 2021 (2021-11-11) entire document | 1-58 |
| A | INTEL CORP. "On SBFD in NR Systems" *3GPP TSG RAN WG1 #112, R1-2300946*, 18 February 2023 (2023-02-18), entire document | 1-58 |

☐ Further documents are listed in the continuation of Box C.　　☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 September 2024** | **23 September 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

| Patent document cited in search report | Publication date (day/month/year) | Patent family member(s) | Publication date (day/month/year) |
|---|---|---|---|
| US 2021352667 A1 | 11 November 2021 | US 11792774 B2 | 17 October 2023 |

## EP 4 761 445 A1

**Patent documents cited in the description**

- CN 202311012531